Europäisches Patentamt

European Patent Office

Office européen des brevets

(11) Publication number: **0 269 233**
**A1**

## (12) EUROPEAN PATENT APPLICATION

(21) Application number: **87308952.8**

(22) Date of filing: **09.10.87**

(51) Int. Cl.⁴: **G10L 5/06**

(30) Priority: **24.10.86 GB 8625468**

(43) Date of publication of application:
**01.06.88 Bulletin 88/22**

(84) Designated Contracting States:
**DE ES FR IT NL**

(71) Applicant: **Smiths Industries Public Limited Company**
**765, Finchley Road**
**London, NW11 8DS(GB)**

(72) Inventor: **Jackson, Susan**
**15 Fernleigh Crescent Up Hatherley**
**Cheltenham Gloucestershire, GL51 5QT(GB)**

(74) Representative: **Flint, Jonathan McNeill**
**SMITHS INDUSTRIES PUBLIC LIMITED**
**COMPANY 765 Finchley Road**
**London NW11 8DS(GB)**

(54) Speech recognition apparatus and methods.

㊐ Speech recognition apparatus has a vocabulary store 2 containing pattern templates or other acoustic information, grammar and collocation information about each word that can be recognised. An acoustic recogniser 30 compares the output of a microphone 1 with the pattern templates in the store 2 to produce signals representing the most likely words spoken and their grammar and collocation. The grammar information is used to check that the words identified by the recogniser are compatible with each other. Grammar information can also be used to restrict the words in the store with which following words are compared by the recogniser 30. A semantics unit 40 compares collocation information of identified words with other identified words in a phrase to check that they are compatible. If identified words are incompatible in grammar or collocation, alternative, less likely words are selected for comparison. When a word is identified with sufficient probability that is compatible in grammar and collocation, an output is generated to a utilisation device 5. If no word is identified with sufficient certainty, a feedback signal is produced to prompt repetition of the word.

| SPEECH PATTERN | WORD | GRAMMAR | COLLOCATION | GROUP No. |
|---|---|---|---|---|
| ‖‖‖ | RADIO | NOUN | PARIS, LONDON FRANKFURT | 1(10%) 2(13%) |
| ‖‖‖ | SELECT | VERB | RADIO, RADAR AUTOPILOT | |
| ‖‖ | ON | ADVERB | RADIO, LIGHTS | |
| ‖‖‖ | UNDER CARRIAGE | NOUN | LOWER, RAISE | |

## SPEECH RECOGNITION APPARATUS AND METHODS

This invention relates to speech recognition apparatus of the kind including a vocabulary store containing information concerning each of the words that can be recognised by the apparatus, a speech sensor that senses words spoken by a speaker and provides a speech signal in accordance therewith, and a recogniser unit that provides an output in respect of an identified word in the store most closely resembling the speech signal.

In complex equipment having multiple functions it can be useful to be able to control the equipment by spoken commands. This is also useful where the user's hands are occupied with other tasks or where the user is disabled and is unable to use his hands to operate conventional mechanical switches and controls.

The problem with equipment controlled by speech is that speech recognition can be unreliable, especially where the voice of the speaker is altered by environmental factors, such as vibration. This can lead to failure to operate or, worse still, to incorrect operation.

Speech signal processing can also be used in communication systems, to improve the quality of speech and reduce noise. Where, however, the speech is severely degraded, such as by vibration or by a high 'g' loading, the processing equipment may not recognise the input as being a speech signal and may therefore remove vital components of the speech signal by filtering. The processing equipment can, therefore, in some circumstances lead to a reduction in the speech information.

It is an object of the present invention to provide improved speech recognition apparatus and methods.

According to one aspect of the present invention there is provided speech recognition apparatus of the above-specified kind, characterised in that the vocabulary store contains grammar information in respect of the grammar of words in the store and collocation information representing other words most likely to be associated with the identified word, that the apparatus includes a grammar unit that receives the grammar information in respect of the identified words such as thereby to provide an indication of whether the grammar of that word is compatible with the grammar of other words, and a semantics unit that receives the collocation information in respect of the identified word and provides an indication of whether the collocation of the identified word is compatible with a previously identified word.

The recogniser unit preferably provides an output in respect of a word in the store that resembles the speech signals less closely than the identified word when the grammar unit indicates that the identified word is not compatible with a previously identified word. The recogniser unit may provide an output in respect of a word in the store that resembles the speech signal less closely than the identified word when the semantics unit indicates that the identified word is not compatible with a previously identified word. The recogniser unit may provide a plurality of outputs in respect of a plurality of words in the store most closely resembling the speech signal, the recogniser unit providing an output indicative of the probability that each of the plurality of words is the spoken word. The grammar unit may be such as to enable only grammatically compatible words to be passed to the semantics unit.

According to another aspect of the present invention there is provided speech recognition apparatus including a vocabulary store containing information concerning each of the words that can be recognised by the apparatus, a speech sensor that senses words spoken by a speaker and provides a speech signal in accordance therewith, and a recogniser unit that provides an output in respect of an identified word in the store most closely resembling the speech signal, characterised in that the vocabulary store contains grammar information in respect of the grammar of words in the store and collocation information representing other words most likely to be associated with the identified word, that the apparatus includes a grammar unit that receives the grammar information in respect of the identified words and provides an output in respect of the expected grammar of a following word, the recogniser unit comparing the speech sound of the following word preferentially with those words in the store having the expected grammar, and a semantics unit that receives the collocation information in respect of the identified word and provides an indication of whether the collocation of the identified word is compatible with other words.

According to a further aspect of the present invention there is provided speech recognition apparatus including a vocabulary store containing each of the words that can be recognised by the apparatus, a speech sensor that senses words spoken by a speaker and provides a speech signal in accordance therewith, and a recogniser unit that provides an output in respect of an identified word in the store most closely resembling the speech signal, characterised in that the vocabulary store contains grammar information in respect of the grammar of words in the store and collocation information representing other words most likely to be associated with the identified word, that the apparatus includes a grammar unit that receives grammar information in respect of the identified words such as thereby to provide an indication of whether the grammar of that word is compatible with the grammar of other words, and a semantics unit that receives the collocation information in respect of the identified words and provides an output in respect of the collocation of the identified word to the recogniser unit, the recogniser unit comparing the speech signal of the word following the identified word preferentially with those words in the store having collocation compatible with the identified word.

The semantics unit may be such as only to provide an indication of the collocation of words identified by the recogniser unit with less than a pretermined probability. The collocation information in the store in respect of the identified word may include identification of a group of other words having a similar meaning to each other most likey to be associated with the identified word.

According to yet another aspect of the present invention there is provided a method of speech recognition including the steps of sensing the word spoken to provide an electrical speech signal in accordance with the sound patterns òf the word and comparing the speech signal with stored patterns in a vocabularly unit thereby to derive an output signal in respect of at least the word having stored speech patterns most closely resembling the electrical speech signal, characterised in that information as to the grammar of that word is derived from the vocabulary unit, that the grammar of successively identified words is analysed to derive an indication of the grammar of another word which could be associated with the grammar of the identified word, that collocation information is derived from the vocabulary unit in respect of word most likely to be associated with the identified word, and that an output is derived in respect of the words spoken using the grammar and collocation information.

A plurality of output signals are preferably derived by comparison with the stored speech patterns in the vocabulary unit, in respect of a plurality of the words having the closest resemblance to the spoken word. An indication may be provided in respect of each of the plurality of words as to the probability of each word being the word spoken. The collocation information may be derived only in respect of those words which are grammatically compatible with previously identified words. The speech signal may be compared in the vocabulary unit preferentially with the stored speech patterns in respect of words having grammar compatible with a previously identified word. The speech signal may be compared in the vocabulary unit preferentially with the stored speech patterns in respect of words having collocation compatible with a previously identified word.

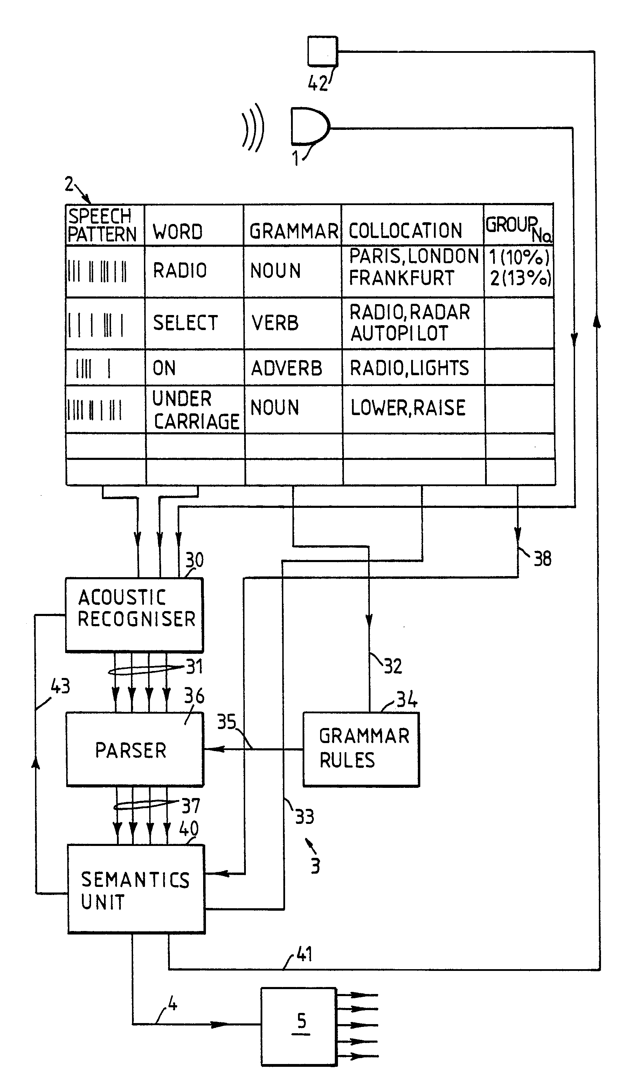

Speech recognition apparatus and its method of operation, in accordance with the present invention, will now be described, by way of example, with reference to the accompanying drawing which illustrates the apparatus schematically.

The speech recognition apparatus includes a microphone 1, or other device for providing an electrical output in accordance with speech of the user. In this respect, for example, an optical lip-reading device or a laryngograph could be used instead of, or in addition to, the microphone 1 to provide a suitable electrical output. The apparatus also includes a vocabulary store 2 and a processing unit 3 which receives outputs from the microphone 1 and the vocabulary store and provides signals on line 4 to a utilisation device 5 in accordance with the words spoken.

The vocabulary store 2 contains a reference vocabulary in the form of pattern templates or word models of the. frequency/time pattern of state descriptions of different words. Alternative representations of each word would, of course, be stored when a non-acoustic device is used to detect speech. Each acoustic pattern or description is labelled according to the word with which it is associated. Also, each word in the store 2 is marked according to its grammatical category or part of speech: "NOUN", "VERB", "ADVERB", "ADJECTIVE" and so on. Furthermore, at least some of the words in the vocabularly store 2 are marked with collocation restrictions in the form of a list of words that may follow or precede the word spoken, together with a probability of the two words being used together.

The processing unit 3 includes an acoustic recogniser 30 that receives the output of the microphone 1 and also receives output signals from the vocabulary store 2 representing the pattern templates or word models of the words in the vocabulary store. The acoustic recogniser 30 compares the microphone signal with the contents of the store 2 to identify the stored word or words most closely resembling to the detected spoken word. The recogniser 30 provides output signals on lines 31 identifying the word in the store 2 most closely matched with the microphone signal together with a signal indicating the probability of that word being the word spoken. Other signals representing alternative words with their lower probabilities are preferably also supplied on lines 31. The store 2 or acoustic recogniser 30 further produces output signals on lines 32, 33 and 38 representative of the grammatical category, collocation information and Group No. associated with each word.

The grammatical category signals are supplied on line 32 to a grammar rules unit 34. The unit 34 operates to predict the grammatical category of following words from those that have preceded them. For example, if a word is identified as being a verb, the grammar rules unit 34 may produce an output to the effect that the following word cannot also be a verb. If a sentence has not included a verb, the grammar rules unit 34 produces an output to the effect that a verb must be included amongst following words in the same sentence. The output of the grammar rules unit 34 is supplied via line 35 to a parser 36 which also receives the outputs on lines 31 from the recogniser 30. The parser 36 and grammar rules unit 34 function together to identify the grammatically most probable combination of words. In addition to identifying following words from the grammar of the words that have preceded them, the parser 36 and grammar rules unit 34 function to predict the grammatical category of an ambiguous word from the grammatical category of words that follow it. or to correct words already identified. For example, the phrase "STOCKHOLM MAIN RADIO PARIS" is not grammatically correct because it does not contain a verb. The parser 36 and grammar rules unit 34 analyse each word in turn to find that the first word STOCKHOLM was identified with a probability of 43% whereas the next-best match for the first word was SELECT with a probability of 40%. Because the second choice has a probability relatively close to that of the first choice and because the second choice is a verb, the parser 36 overrides the first choice with the second choice so that the word chain read out of the parser 36 becomes SELECT MAIN RADIO PARIS, which is now grammatically satisfactory.

The output of the parser 36 is supplied via lines 37 to a semantics unit 40. The outputs on lines 37 still contain information as to the probability of each word being correct, together with the identification of less likely words, although these probabilities and the order of most likely words may have been altered by the parser 36 and grammar rules unit 34 to produce a grammatically satisfactory word string.

The semantics unit 40 also receives information on line 33 from the store 2 in respect of the collocation information associated with each word. The semantics unit 40 functions to check each word, or only those selected words identified with less than a certain probability, to ascertain whether their collocation is compatible. If the collocation information is compatible, the unit 40 provides an output on line 4 to the utilisation device 5 representative of the command associated with the identified phrase. If, however, the collocation information is not compatible, the semantics unit 40 examines alternative words identified with lower probability to assess whether any of these have compatible collocation and sufficient probability to be the word spoken.

If no word is identified with sufficiently probability and with compatible collocation, the semantics unit 40 provides an output on line 41 to a feedback unit 42 which informs the user that no identification has been achieved and requests repetition of the phrase. The feedback unit 42 may be a visual display or an audible device.

If the semantics unit 40 does, however, locate an alternative word which was identified with sufficient probability and has compatible collocation, the semantics unit substitutes this alternative word in the phrase and produces a command output accordingly. For example, the phrase supplied to the semantics unit might be LOWER FRANKFURT which is grammatically satisfactory. When, however, the collocation information is checked it is found to be as follows:
LOWER: FLAPS; UNDERCARRIAGE; ALTITUDE
FRANKFURT: RADIO; NAVIGATION BEACON
Neither word therefore appears in the collocation information of the other word making it unlikely that the phrase LOWER FRANKFURT has been identified correctly. The semantics unit 40 checks alternative words identified with less probability and finds that, for the second alternative word, UNDERCARRIAGE was identified with a probability only slightly less than that of FRANKFURT. The word UNDERCARRIAGE is compatible with the collocation of LOWER and, when the collocation of UNDERCARRIAGE is checked it is found to be as follows:
UNDERCARRIAGE: RAISE; LOWER

This is therefore also compatible and the word UNDERCARRIAGE is substituted for FRANKFURT in the phrase. This causes the semantics unit 40 to provide a command signal to lower the undercarriage.

It is not essential for all words in the vocabulary store 2 to have collocation information associated with them. For example, the articles A and THE can be used with any noun so it might require excessive storage capacity to list all the nouns in the collocation part of the vocabulary store. Instead, these articles and similar such words may be assigned a special grammatical category so that the parser 36 and grammar rules unit 34 recognises that A or THE must be followed by a noun and that it can be any noun (this may be qualified by excluding proper nouns).

The collocation information contained in the store 2 need not take the form of a list of words that can follow an identified word. Instead, each of some at least of the words may be allocated a Group No. according to the meaning of the words. For example, nouns relating to weapons e.g.

"weapons", "missiles", "arms", "bombs" may be marked as being in Group 1. Nouns relating to navigation e.g. "map", "navigation", "compass", "gyro", "waypoint" may be marked as being in Group 2. Against these words in the store there is marked information as to the Group No. of that word and the Group No. or Group Nos. of those other words most likely to be found in the same sentence with their probabilities. The collocation information for the verb MAKESAFE, for example, might be: GROUP 1 = 80%; GROUP 2 = 20%, thereby indicating that words in Group 1 are more likely to appear in the same sentence as the word MAKESAFE than are the words in Group 2. Once the parser 36 has identified that the next word is expected to be a noun, the process of comparing the word sensed by the microphone with words in the store can be confined, initially at least, to those nouns in Group 2. To do this, the semantics unit 40 supplies feedback signals via line 43 to the acoustic recogniser 30 to direct its comparison to words in a particular group.

Words in different grammatical categories are preferably put in different groups and each word in the store may have collocation information concerning groups of different grammatical categories. For example, MAKESAFE may also have a group of adjectives associated with it. The collocation information in respect of the words in the store may list all the groups used, but those groups unlikely to be associated with that word being assigned only a low-probability, default value so that a comparison process with these words in these groups is performed only if no match is found with words in the other groups. By using collocation information to direct the search preferentially to words more likely to be spoken, the speed of identification can be increased.

It will be appreciated that instead of analysing the grammar of each word prior to analysing the collocation information, the collocation information could be checked first, and word signals corrected for collocation defects prior to analysis for compatible grammar. Alternatively, the grammatical and semantic checks could be performed in parallel and the resulting outputs compared. If necessary, weighting could be given to one or other of the grammatically corrected or collocation corrected outputs.

The present invention enables a more accurate recognition of spoken words than is possible by acoustic matching alone. By using the grammar and collocation information associated with each word, it is possible to identify a word which may not be the closest match acoustically with the received spoken word, but which in fact, more accurately represents the actual word spoken. In noisy environments, and where the speaker is under stress, the speech output provided by the microphone easily becomes degraded and the risk of confusion between similar sounding words is increased. The arrangement Words in different grammatical categories are preferably put in different groups and each word in the store may have collocation information concerning groups of different grammatical categories. For example, MAKESAFE may also have a group of adjectives associated with it. The collocation information in respect of the words in the store may list all the groups used, but those groups unlikely to be associated with that word being assigned only a low-probability, default value so that a comparison process with these words in these groups is performed only if no match is found with words in the other groups. By using collocation information to direct the search preferentially to words more likely to be spoken, the speed of identification can be increased.

It will be appreciated that instead of analysing the grammar of each word prior to analysing the collocation information, the collocation information could be checked first, and word signals corrected for collocation defects prior to analysis for compatible grammar. Alternatively, the grammatical and semantic checks could be performed in parallel and the resulting outputs compared. If necessary, weighting could be given to one or other of the grammatically corrected or collocation corrected outputs.

The present invention enables a more accurate recognition of spoken words than is possible by acoustic matching alone. By using the grammar and collocation information associated with each word, it is possible to identify a word which may not be the closest match acoustically with the received spoken word, but which in fact, more accurately represents the actual word spoken. In noisy environments, and where the speaker is under stress, the speech output provided by the microphone easily becomes degraded and the risk of confusion between similar sounding words is increased. The arrangement of the present invention can be used to reduce this risk of confusion.

## Claims

1. Speech recognition apparatus including a vocabulary store containing information concerning each of the words that can be recognised by the apparatus, a speech sensor that senses words spoken by a speaker and provides a speech signal in accordance therewith, and a recogniser unit that provides an output in respect an identified word in the store most closely resembling the speech signal, characterised in that the vocabulary store (2) contains grammar information in respect of the grammar of words in the store and collocation information representing other words most likely to be associated with the identified word, that the apparatus includes a grammar unit (34, 36) that receives the grammar information in respect of the identified words such as thereby to provide an indication of whether the grammar of that word is compatible with the grammar of other words, and a semantics unit (40) that receives the collocation information in respect of the identified word and provides an indication of whether the collocation of the identified word is compatible with a previously identified word.

2. Speech recognition apparatus according to Claim 1, characterised in that the recogniser unit (30) provides an output in respect of a word in the store (2) that resembles the speech signals less closely than the identified word when the grammar unit (34, 36) indicates that the identified word is not compatible with a previously identified word.

3. Speech recognition apparatus according to Claim 1 or 2, characterised in that the recogniser unit (30) provides an output in respect of a word in the store (2) that resembles the speech signal less closely than the identified word when the semantics unit (40) indicates that the identified word is not compatible with a previously identified word.

4. Speech recognition apparatus according to any one of the preceding claims, characterised in that the recogniser unit (30) provides a plurality of outputs in respect of a plurality of words in the store (2) most closely resembling the speech signal, and that the recogniser unit (30) provides an output indicative of the probability that each of the plurality of words is the spoken word.

5. Speech recognition apparatus according to any one of the preceding claims, characterised in that the grammar unit (34, 36) only enables grammatically compatible words to be passed to the semantics unit (40).

6. Speech recognition apparatus including a vocabulary store containing information concerning each of the words that can be recognised by the appratus, a speech sensor that senses words spoken by a speaker and provides a speech signal in accordance therewith, and a recogniser unit that provides an output in respect of an identified word in the store most closely resembling the speech signal, characterised in that the vocabulary store (2) contains grammar information in respect of the grammar of words in the store and collocation information representing other words most likely to be associated with the identified word, that the apparatus includes a grammar unit (34, 36) that receives the grammar information in respect of the identified words and provides an output in respect of the expected grammar of a following word, the recogniser unit (30) comparing the speech sound of the following word preferentially with those words in the store having the expected grammar, and a semantics unit (40) that receives the collocation information in respect of the identified word and provides an indication of whether the collocation of the identified word is compatible with other words.

7. Speech recognition apparatus including a vocabulary store containing information concerning each of the words that can be recognised by the apparatus, a speech sensor that senses words spoken by a speaker and provides a speech signal in accordance therewith, and a recogniser unit that provides an output in respect of an identified word in the store most closely resembling the speech signal, characterised in that the vocabulary store (2) contains grammar information in respect of the grammar of words in the store and collocation information representing other words most likely to be associated with the identified word, that the apparatus includes a grammar unit (34, 36) that receives grammar information in respect of the identified words such as thereby to provide an indication of whether the grammar of that word is compatible with the grammar of other words, and a semantics unit (40) that receives the collocation information in respect of the identified words and provides an output in respect of the collocation of the identified word to the recogniser unit (30), the recogniser unit comparing the speech signal of the word following the identified word preferentially with those words in the store having collocation compatible with the identified word.

8. Speech recognition apparatus according to any one of the preceding claims, characterised in that the semantics unit (40) only provides an indication of the collocation of words identified by the recogniser unit (30) with less than a predetermined probability.

9. Speech recognition apparatus according to any one of the preceding claims, characterised in that the collocation information in the store (2) in respect of the identified word includes identification of a group of other words having a similar meaning to each other most likely to be associated with the identified word.

10. A method of speech recognition including the steps of sensing the word spoken to provide an electrical speech signal in accordance with the sound patterns of the word and comparing the speech signal with stored speech patterns in a vocabulary unit thereby to derive an output signal in respect of at least the word having stored speech patterns most closely resembling the electrical speech signal, characterised in that information as to the grammar of that word is derived from the vocabulalry unit (2), that the grammar of successively identified words is analysed to derive an indication of the grammar of another word which could be associated with the grammar of the identified word, that collocation information is derived from the vocabulary unit in respect of a word most likely to be associated with the identified word, and that an output is derived in respect of the words spoken using the grammar and collocation information.

11. A method of speech recognition according to Claim 10, characterised in that a plurality of output signals are derived by comparison with the stored speech patterns in the vocabulary unit, in respect of a plurality of the words having the closest resemblance to the spoken word.

12. A method of speech recognition according to Claim 11, characterised in that an indication is provided in respect of each of the plurality of words as to the probability of each word being the word spoken.

13. A method of speech recognition according to any one of Claims 10 to 12, characterised in that collocation information is derived only in respect of those words which are grammatically compatible with previously identified words.

14. A method of speech recognition according to any one of Claims 10 to 13, characterised in that the speech signal is compared in the vocabulary unit (2) preferentially with the stored speech patterns in respect of words having grammar compatible with a previously identified word.

15. A method of speech recognition according to any one of Claims 10 to 14, characterised in that the speech signal is compared in the vocabulary unit (2) preferentially with the stored speech patterns in respect of words having collocation compatible with a previously identified word.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | 3ème CONGRES AFCET - RECONNAISSANCE DES FORMES ET INTELLIGENCE ARTIFICIELLE, Nancy, 16th-18th September 1981, pages 627-639; G. PERENNOU et al.: "Decodage lexical et composante syntactico-semantique dans ARIAL II" * Pages 628-629, paragraph I; pages 631-638; figures 1,2,5 * | 1-8,10-15 | G 10 L 5/06 |
| X | TRANSACTIONS OF THE I.E.C.E. OF JAPAN, vol. E69, no. 5, May 1986, pages 675-683, Tokyo, JP; M. SHIGENAGA et al.: "A speech recognition system for continuously spoken japanese sentences - SPEECH YAMANASHI-" * Pages 677-680; tables 2,5,6,7; figure 1 * | 1-8,10, 15 | |
| X | TECHNOLOGY AND SCIENCE OF INFORMATICS, vol. 1, no. 1-6, 1983, pages 329-344, North Oxford Academic/AFCET/BORDAS, Oxford, GB; J.M. PIERREL: "Use of linguistic constraints for automatic continuous speech understandng: the Myrtille II system" * Pages 338-342, paragraphs 3.3,4; figures 1,8,9 * | 1,6,7, 10 | |
| A | TECHNOLOGY AND SCIENCE OF INFORMATICS, vol. 1, no. 1-6, 1983, pages 189-203, North Oxford Academic/AFCET/BORDAS, Oxford, GB; P. QUINTON: "Use of syntactic constraints for continuous speech recognition" * Pages 190-194, paragraphs 2,3; pages 196-202, paragraph 5; figure 1 * -/- | 1-4,6,7 ,10-15 | |

**TECHNICAL FIELDS SEARCHED (Int. Cl.4)**

G 10 L 5/00

The present search report has been drawn up for all claims

| Place of search | Date of completion of the search | Examiner |
|---|---|---|
| THE HAGUE | 01-02-1988 | DELPORTE B.P.M. |

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | NAECON 1984 Proceedings of the IEEE 1984 NATIONAL AEROSPACE AND ELECTRONICS CONFERENCE - NAECON 1984 -, Dayton, 21st-25th May 1984, vol. 2, pages 916-923; R. LeROY ROUTH et al.: "Continuous speech recognition using natural language constraints" * Pages 919-922, paragraphs III,IV * --- | 1,8,10, 15 | |
| A | REVUE HF, vol. 13, no. 5, 1985, pages 149-161, Bruxelles, BE; C.J. WELLEKENS et al.: "Decodage acoustique et analyse linguistique en reconnaissance de la parole" ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 01-02-1988 | DELPORTE B.P.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)